# EUROPEAN PATENT SPECIFICATION

(11) **EP 3 016 191 B1**
(45) Date of publication and mention of the grant of the patent: **19.12.2018**
(21) Application number: 14190594.3
(22) Date of filing: 28.10.2014
(51) Int. Cl.: H01M 8/12, H01M 4/86, H01M 4/88, H01M 4/90

(54) **A fabrication process for production of SOFC-MEA with a pore array anode structure for improving output power density**
Ein Herstellungsverfahren zur Herstellung von SOFC-MEA mit einer Porenanordnung in der Anodenstruktur zur Verbesserung der Ausgangsleistungsdichte
Un procédé de fabrication pour la production de SOFC-MEA avec une structure d'anode présentant une matrice de pores pour améliorer la densité de puissance de sortie

(43) Date of publication of application: 04.05.2016
(73) Proprietor: Institute of Nuclear Energy Research, Atomic Energy Council, Executive Yuan, Taoyuan 325 (TW)
(72) Inventor: Lin, Tai-Nan, Taoyuan (TW); Kuo, Jen-Yuan, Taoyuan (TW); Kuo, Hong-Yi, Taoyuan (TW); Kao, Wei-Xin, Taoyuan (TW); Yeh, Chun-Yen, Taoyuan (TW)
(74) Representative: Lermer, Christoph

(56) References cited:
- WO-A2-02/058169
- US-A- 6 051 330
- US-A1- 2009 166 907

## Description

### Background of the Invention

### 1. Field of the Invention

The invention relates to a fabrication process for production of a planar solid oxide fuel cell with high conductivity by reducing impedance of a solid oxide fuel cell (SOFC) membrane electrolyte assembly (MEA), in particular, to a pore array structure furnished on one or plurality of layers of anode green tapes on the utmost outside of the anode.

### 2. Description of the Prior Art

The operation temperature for traditional YSZ electrolyte supported cell (ESC) is in the range from 800°C to 1000°C. Its electrolyte substrate thickness is about 150 µm to 300 µm. ESC type cell normally operates at high temperature mainly due to thick electrolyte substrate. Thus, the mainstream product is (NiO+YSZ) anode supported cell (ASC), which has electrolyte layer with YSZ as primary material and thickness is around 10 µm, and it can lower the operation temperature in the range from 650°C to 800°C. A common ASC membrane electrolyte assembly (MEA) process is first to synthesize anode, and then conduct sintering for electrolyte and cathode. It usually takes at least three high-temperature sintering processes at about 1400°C. The multiple-stage sintering process usually will cause compositional change or deformation, so it increases cell impedance. This technology research is mainly focused on further improving the traditional MEA research program, with the anode pore array structure, can effectively reduce the gas diffusion impedance, increase output power density of batteries and provide sustainable power output. After resolving the adverse impact caused by the electrodes sintering, the SOFC power generation will be greatly enhanced.

The traditional YSZ electrolyte supported cell (ESC) is operated with temperature range between 800 °C to 1000 °C. The electrolyte substrate thickness is about from 150 µm to 300 µm. Mainly due to thick electrolyte substrate, ESC type cell operates at high temperature. The mainstream product is (NiO+YSZ) anode supported cell (ASC), which has electrolyte layer (YSZ as primary material) and thickness is around 10 µm, and it can lower the operation temperature to a range from 650 °C to 800 °C. A common ASC membrane electrolyte assembly (MEA) process is first to synthesize anode, and then conduct sintering for electrolyte and cathode. It usually takes at least three high-temperature sintering processes at about 1400°C. The multiple-stage sintering process would usually cause compositional change or deformation, so it increases cell impedance. The novel development for this technology is primarily to maintain the traditional manufacturing process and use a novel treatment process that can effectively solve the negative issues with multiple-stage sintering. This novel process can effectively reduce impedance, increase ion conductivity and increase SOFC power generation.

Conventional anode supported SOFC-MEA fabrication process is to use tape casting to produce electrode green tapes, adjust the thickness and the geometry of green tape substrate through lamination, produce a half-cell containing electrolyte layer and electrode supporting substrate through calcinations/sintering, and finally use screen printing technique to build cathode layer onto the half cell substrate to complete the production of the full cell. The main disadvantages of the conventional fabrication process are stability and durability, namely, reduction-oxidation cycling and/or thermal cycling, are poor.

The US patent application 11/964,724 filed on Dec. 27, 2007 (issued as US patent 7,815,843 on Oct 19, 2010) is part of the prior art and discloses a process for anode treatment of SOFC-MEA to upgrade power density in performance tests. In a prior art, US patent No. 6,051,330, is disclosed an interconnect for flow of the fuel and oxidant in a SOFC, and vias for carrying the fuel and oxidant having patterns in the anode, electrolyte, cathode and interconnect for distributing the fuel or oxidant. However, the cited prior art doesn't teach the claimed limitation of the present invention that the pore array perforation is furnished on one or plurality of layers of the anode green tape on the utmost outside of the anode, and the pore array furnished on the plurality of layers of the anode green tape is distributed and interlaced on different anode green tapes, respectively. Therefore, the vias in the cited prior art embossed on each of the anode, electrolyte and cathode in a SOFC without considering the strength of the structure of the SOFC might cause the SOFC stack assembly package to fracture during high temperature operation.

In order to facilitate the mechanism of gas-solid phase reaction, the cathode and anode electrodes need to be produced with porosity as a basic requirement, and that will compromise the mechanical strength of the electrodes, causing subsequent cell stack assembly package subject to break and fail. The drawbacks abovementioned hinder the development of SOFC to a perfect structure. An innovative solution is in need to solve the problem.

In view of the drawbacks of the conventional art, the present invention provides an improvement to the fabrication process for the solid oxide fuel cell (SOFC) membrane electrode assembly (MEA), using tape casting to produce anode substrates. This thin strip of green tape anode is subject to a special treatment of pore array perforation, forming an anode supporting substrate by sintering, followed by screen printing / sputtering / spin coating / spray film coating fabrication process to successfully produce high quality SOFC cell with low fuel gas diffusion impedance, improving electrical conductivity of the anode side, and finally removing the insulating layer of depleted nickel layer formed on the surface of the anode through precision abrasion. It can effectively enhance the performance of SOFC unit cell.

### Summary of the Invention

The invention is defined in claim 1. The main object of the present invention is to provide a solid oxide fuel cell (SOFC) membrane electrode assembly (MEA) by using tape casting to produce thin strip of green tape anode substrate, in particular, the thin strip of green tape anode is subject to a special treatment of pore array perforation, forming an anode supporting substrate through sintering, followed by screen printing / sputtering / spin coating / spray film coating to produce an unit cell with low diffusion impedance in the fuel gas electricity generation operation, and lastly removing a nickel depleted layer on the surface of the anode with precise abrasion to improve performance of the SOFC unit cell.

Another object of the present invention is to provide an innovative pore array perforation on the anode electrode for the SOFC-MEA unit cell to improve electrical performance for the unit cell. The unit cell is subject to a special treatment of pore array perforation with a thin metal tube to press and pierce holes on the anode electrode without causing irregular form or fracture at the perimeter of holes being perforated, so that the unit cell having low diffusion impedance in fuel gas electricity generation operation that can improve the ability of three phase reaction at interfacial area among electrodes of the unit cell that can effectively enhance the output power density of the unit cell and provide power output with long term stability.

Another object of the present invention is to provide an innovative pore array perforation on the anode electrode for the SOFC-MEA unit cell to improve electrical performance for the unit cell, wherein the pore array perforation is furnished on one or plurality of layers of the anode green tape on the utmost outside of the anode. In an electrical performance test of the SOFC-MEA unit cell produced by the present invention, it shows that the electricity generation efficiency may raise a percentage of 25%, and the gas diffusion impedance can be lowered by a percentage of 40%.

The above and other objects, features and advantages of the present invention will become apparent from the following detailed description taken with the accompanying drawings.

### Brief Description of the Drawings

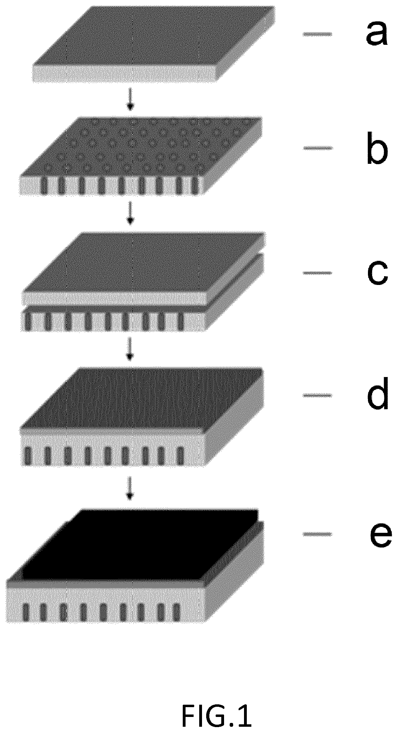

Figure 1 is a block diagram illustrating a manufacturing process of the present invention, which comprises a) anode green tape fabrication, b) pore array anode structure, c) laminating layers of the anode green tape that include perforated and non-perforated anode green tape to form an anode supported substrate, d) electrolyte layer built on a abrasive and polished surface of the anode electrode, and e) fabrication of a cathode electrode;
Figure 2a is a schematic drawing illustrating a pore array anode structure of the present invention; Figure 2b is a front view of an anode supported SOFC with the pore array anode structure; Figure 2c and Figure 2d are another embodiments showing interlaced pore array perforated on a plurality of thin strips of the anode green tape, respectively, of the present invention;
Figure 3a is a front view of an anode supported SOFC of the present invention; Figure 3b is a picture indicating a micro structure view of the SOFC of the present invention;
Figure 4a is an electrical performance test result for a SOFC without perforation of a pore array anode structure; Figure 4b indicates an electrical performance test result for a SOFC with perforation of a pore array anode structure;
Figure 5a is an impedance analysis result for a SOFC without perforation of a pore array anode structure; Figure 5b indicates an impedance analysis result for a SOFC with perforation of a pore array anode structure, and
Figure 6 is a schematic drawing indicates a long duration performance test result for a SOFC with perforation of a pore array anode structure.

### Detailed Description of the Preferred Embodiment

The invention uses a novel process to produce high conductivity or low resistance planar solid oxide fuel cell. The procedures for the process are described as follows:
It is to use tape casting to produce a thin strip of green tape anode for a planar SOFC-MEA. Use diameter from 0.1 cm to 0.3 cm metal tube to fabricate a pore array structure on one side of the thin strip of green tape anode in a press and pierce manner, laminating multiple layers that include the perforated and non-perforated thin strips of the green tape anode through heat lamination and equalized water pressure lamination process, forming an anode substrate having thickness between 300 µm and 800 µm, conducting sintering between the temperature range from 1200 °C to 1500 °C, preferably 1250 °C, for several hours to produce the first stage SOFC of pre-sintered anode supported substrate. The material in this stage can be of NiO/YSZ, NiO/SDC, and NiO/LSGM.

It is to use ultrasonic equipment to clean up. After drying, use membrane electrolyte fabrication processes such as sputtering, spin coating and screen printing coating to produce electrolyte layer with thickness less than 10µm. Conduct sintering at temperature range from 1200°C to 1500°C for several hours to complete the production of half cell. Use scanning electronic microscope (SEM) to analyze the microstructure of the half cell to assure the electrolyte layer is open pore free and fully dense, and has good interfacial adhesion between electrode and electrolyte.

Onto the electrolyte layer of the half cell, use screen printing technology to build porous cathode layer, of which the material is usually LSM or LSCF etc.. Then conduct sintering for about 3 hours at temperature in the range from 900 °C to 1200 °C to complete the fabrication of SOFC-MEA. The complete unit cell is subject to anode surface polishing to remove nickel depleted layer about 10 µm to 30 µm in thickness. The main object of the SOFC-MEA unit cell of the present invention is to provide an innovative pore array perforation on the anode electrode for the SOFC-MEA unit cell to improve the electrical performance for the unit cell. The unit cell with special treatment of pore array perforation of the present invention will provide low diffusion impedance in the fuel gas generation operation, and improve the ability of three interfacial reactions among electrodes of the unit cell, which can effectively enhance the output power density of the unit cell and provide power output with long term stability.

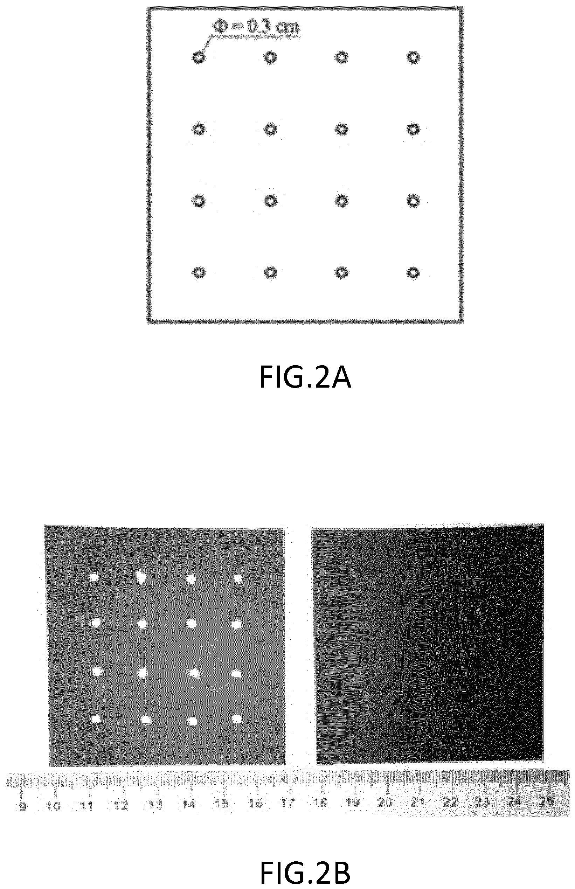

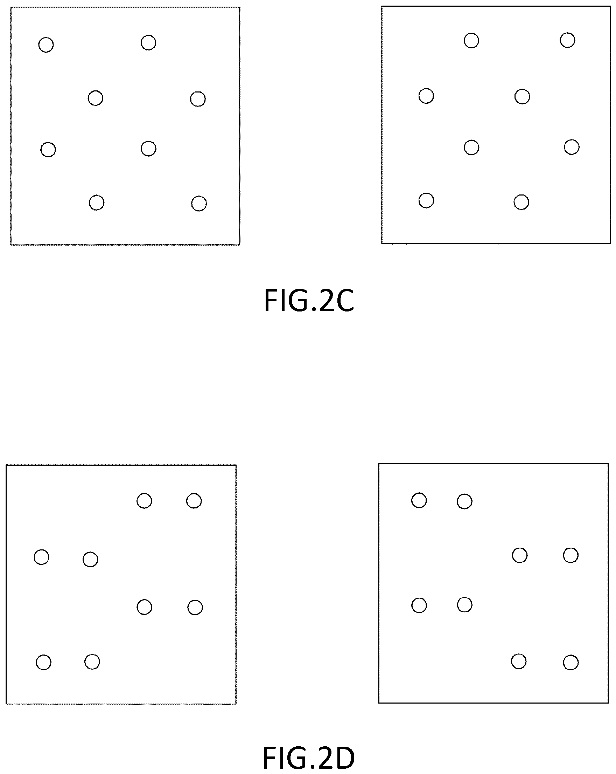

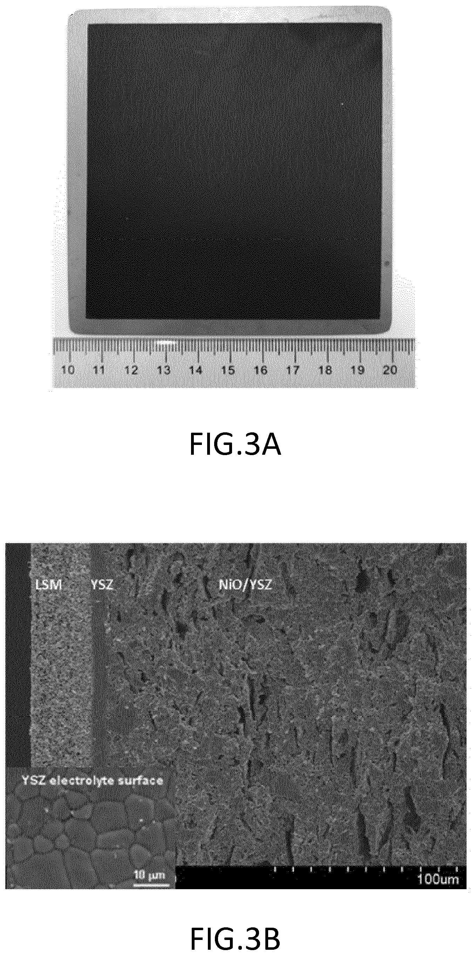

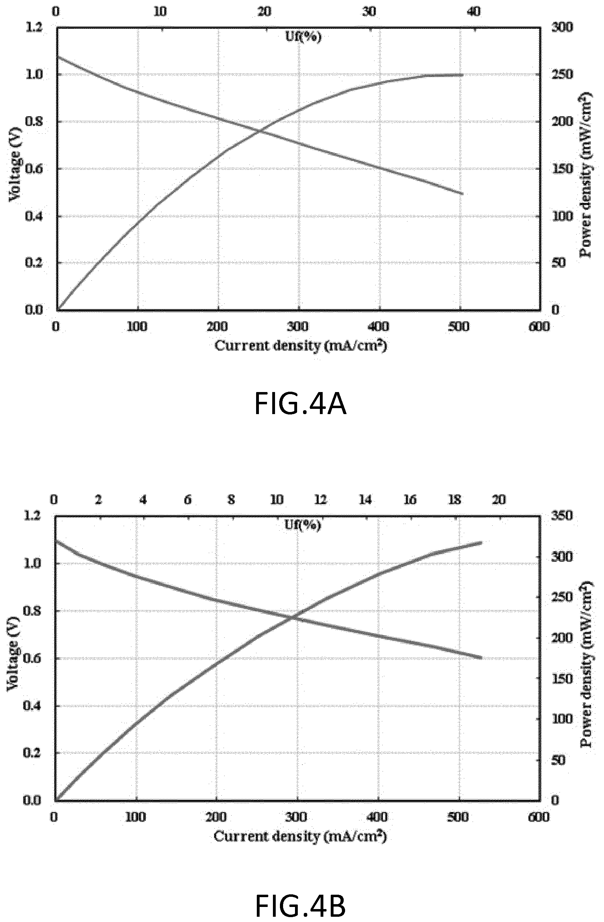

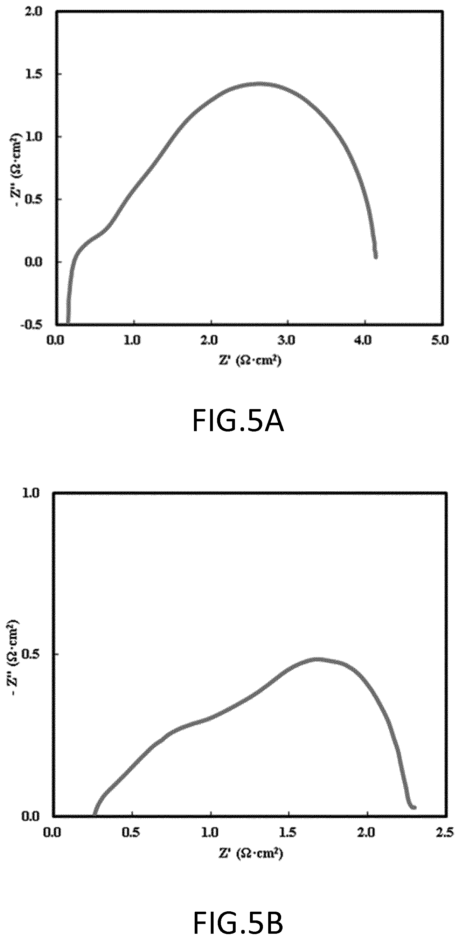

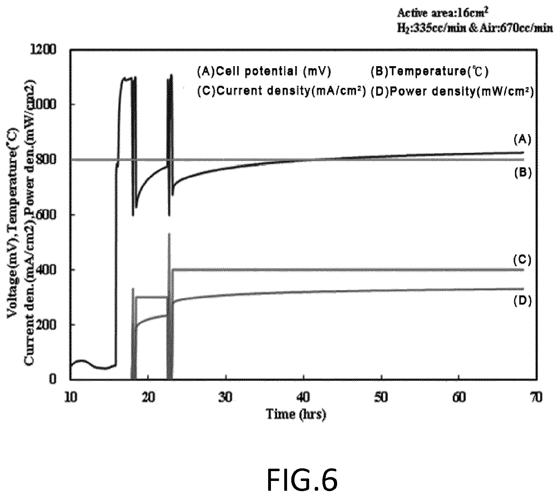

The invention uses a novel process to produce a planar solid oxide fuel cell high conductivity or low impedance with material 8YSZ, SDC, and LSGM. With reference to Figure 2 through Figure 6, the preferred embodiment for the process of the present invention comprises the steps of:
Step 1: Using tape casting to produce anode green tapes, and producing anode substrate for MEA with 50 wt% NiO+50 wt% 8YSZ and a certain amount of graphite;
Step 2: Fabricating a pore array structure on the surface of the tape casting made SOFC anode green tape, wherein the pore array perforation is furnished on one or plurality of layers of the anode green tape on the utmost outside of the anode, wherein the pore array furnished on the plurality of layers is distributed and interlaced on different anode green tapes, as shown in Figure 2c and Figure 2d, respectively. In order to avoid irregular pore and fracture caused by stress, the pore array is formed in a press and pierce manner using metal tube with diameter about 0.3 cm to fabricate the pore array perforation that has spacing of about 1.4 cm between each pore on one side of the thin strip of green tape anode, laminating multiple layers that include the perforated and non-perforated thin strips of the green tape anode through heat lamination and equalized water pressure lamination process, forming green tapes for anode supported substrate having thickness between 300 µm and 800 µm. The full size of the unit cell to be made is in the range from 5 × 5 cm² to 10 × 10 cm², but in considering a sintering shrinkage effect during the fabrication process, the size of anode green tape is made in the range from 7 × 7 cm² to 12 × 12 cm². A drawing illustrates the pore array structure is shown in Figure 2.
Step 3: Conducting sintering the anode supported substrate green tape at temperature about 1250 °C for 4 hours with temperature increment/decrement rate less than, but not limited to, 3 °C/min to obtain a first stage SOFC anode supported substrate, and conducting surface abrasion and polishing for the SOFC anode supported substrate, firstly, use coarse sand paper to perform surface pre-abrasion and polishing, and then change to finer sand paper. This step is to assure the flatness of the anode supported substrate.
Step 4: Using spin coating to build electrolyte with thickness less than 10 µm onto the polished electrode surface to produce SOFC half cell with green tape of electrolyte, conducting sintering between 1200°C and 1600°C, preferably 1400°C, for more than 6 hours with temperature increment/decrement rate less than, but not limited to, 3 °C/min to obtain the first stage ceramic half cell, followed by using SEM to analyze the microstructure of half cell and assure good adhesion between electrode and electrolyte, and that the electrolyte layer is open pore free, if open pores are still existing in the electrolyte layer, fixing the open pores with coating or sintering at temperature about 1400°C for more than 6 hours to obtain a fully dense electrolyte, as shown in Fig. 3, having thickness of 10 µm. A unit cell with fully air tight structure of commercial size 10 × 10 cm² can be produced with the present invention.
Step 5: Onto the electrolyte layer use screen printing process to build porous cathode layer of LSM material. Then conduct sintering at about 1200°C for 3 hours. The sintering temperature rate can be, but not limited to, 3°C/min or less. This will lead to production of an unit cell of SOFC-MEA, as shown in Fig. 3. The unit cell is subject to power performance testing. The test result is compared with a unit cell produced without the pore array perforation on the anode green tape, as shown in Fig. 4 and Fig. 5. It indicates that open circuit voltage (OCV) has reached the theoretical standard value (> 1.1V), electricity generation efficiency has been raised 25%, and the gas diffusion impedance has been lowered 40%. The Fig. 6 also indicates a long duration electrical performance test result for a SOFC-MEA unit cell having pore array perforation on the anode green tape. The unit cell has increasing voltage rising rate under operation condition of constant electric current 400mA/cm2, it indicates that the pore array perforation provides effective diffusion path for fuel gas, increasing gas density in the three phase point at interfacial area between anodes and electrolyte, and improving the efficiency of electrochemical reaction.

## Claims

1. A fabrication process for production of a planar type solid oxide fuel cell membrane electrode assembly with pore array anode structure, comprising the steps of:
Step1: producing an anode substrate for MEA by tape casting to produce thin strip anode green tapes;
Step2: providing a pore array structure having each pore with specified size of diameter and spacing between pores on the surface of the anode green tape, laminating multiple layers of the anode green tape that include perforated and non-perforated anode green tape through heat lamination and equalized water pressure lamination process to produce an anode supported substrate of green tapes having thickness between 300 µm and 800 µm;
Step 3: conducting sintering on the anode supported substrate of green tapes at temperature about 1250 °C for 4 hours with temperature increment/decrement rate less than 3 °C/min to obtain a first stage SOFC anode supported substrate;
Step 4: conducting surface abrasion and polishing for the SOFC anode supported substrate, firstly, using a coarse sand paper to perform a surface pre-abrasion and polishing, followed by using a finer sand paper to produce a flat and smooth surface of the anode supported substrate;
Step 5: building an electrolyte electrode by spin coating to produce a SOFC half cell with thickness less than 10 µm on the flat and smooth surface of the anode supported substrate, conducting sintering between 1200°C and 1600°C for more than 6 hours with temperature increment/decrement rate less than 3 °C/min to obtain a first stage ceramic half cell, and using SEM to analyze the microstructure of the half cell to assure good adhesion between the anode electrode and electrolyte and that the electrolyte layer is open pore free, if open pores are still existing in the electrolyte layer, fixing the open pores with spin coating or sintering at temperature about 1350°C for more than 6 hours to obtain a open pore free and fully dense electrolyte,
Step 6: building a porous cathode layer of LSM material onto the electrolyte layer by screen printing, followed by sintering at about 1200°C for 3 hours with a sintering temperature rate less than 3°C/min to complete the production of a unit cell of SOFC-MEA,
wherein the pore array perforation is furnished on one or plurality of layers of the anode green tape on the utmost outside of the anode, wherein the pore array furnished on the plurality of layers is distributed and interlaced on different anode green tapes, respectively.

2. The fabrication process of claim 1, wherein the pore array structure is formed in a press and pierce manner using a metal tube with diameter in a range about 0.1 cm to 0.3 cm to fabricate the pore array with the spacing of about 1.4 cm between each pore on one side of the thin strip of the green tape anode.

3. The fabrication process of claim 1, wherein the laminating multiple layers of the anode green tapes are of 2 to 6 layers.

4. The fabrication process of claim 1, wherein the abrasion and polishing depth on the surface of the anode substrate is about from 10 µm to 20 µm.

## Patentansprüche

1. Herstellungsverfahren zur Herstellung einer Festoxid-Brennstoffzellenmembran-Elektrodenanordnung vom planaren Typ mit einer Porenanordnungs-Anodenstruktur, umfassend die Schritte:
Schritt 1: Herstellen eines Anodensubstrats für MEA durch Bandgießen, um Dünnbandanoden-Grünbänder herzustellen;
Schritt 2: Bereitstellen einer Porenanordnungsstruktur, wobei jede Pore spezifizierte Größe des Durchmessers und Abstands zwischen Poren auf der Oberfläche des Anodengrünbandes hat, Laminieren mehrerer Schichten des Anodengrünbands, die perforiertes und nicht perforiertes Anodengrünband enthalten, durch Wärmelaminierung und ein Wasserlaminierungsverfahren mit Druckausgleich, um ein anodengestütztes Substrat von Grünbändern mit einer Dicke zwischen 300 µm und 800 µm herzustellen;
Schritt 3: Durchführen von Sintern auf dem anodengestützten Substrat von Grünbändern bei einer Temperatur von etwa 1250 ° C für 4 Stunden mit einem Temperaturinkrement- / - dekrementrate von weniger als 3 ° C / min, um eine erste Stufe eines SOFC-Anodengetragenes Substrat zu erhalten;
Schritt 4: Durchführen eines Oberflächenabriebs und -polierens für das SOFC-Anodengetragene Substrat, wobei zuerst ein grobes Sandpapier verwendet wird, um einen Oberflächenvorabrieb und -polieren durchzuführen, gefolgt von einem feineren Sandpapier, um eine flache und glatte Oberfläche des Anoden-getragenen Substrats zu erzeugen;
Schritt 5: Aufbau einer Elektrolytelektrode durch Spincoating zur Herstellung einer SOFC-Halbzelle mit einer Dicke von weniger als 10 µm auf der flachen und glatten Oberfläche des anodengestützten Substrats, Durchführung von Sintern zwischen 1200 ° C und 1600 ° C für mehr als 6 Stunden mit eine Temperaturinkrement / -dekrementrate von weniger als 3 ° C / min, um eine erste Stufe der keramische Halbzelle zu erhalten, und Verwendung von SEM, um die Mikrostruktur der Halbzelle zu analysieren, um eine gute Haftung zwischen der Anodenelektrode und dem Elektrolyten zu gewährleisten, und dass die Elektrolytschicht frei von offenen Poren ist, wenn in der Elektrolytschicht noch offene Poren vorhanden sind, Fixieren der offenen Poren mit Spincoatimng oder Sintern bei einer Temperatur von etwa 1350 ° C für mehr als 6 Stunden, um einen frei von offenen Poren und vollständig dichten Elektrolyten zu erhalten,
Schritt 6: Aufbau einer porösen Kathodenschicht aus LSM-Material auf der Elektrolytschicht durch Siebdruck, gefolgt von Sintern bei etwa 1200 ° C für 3 Stunden mit einer Sintertemperaturrate von weniger als 3 ° C / min, um die Herstellung einer Elementarzelle von SOFC-MEA zu vervollständigen,
wobei die Perforation der Porenanordnung auf einer oder mehreren Schichten des Anodengrünbandes auf der äußersten Außenseite der Anode vorgesehen ist, wobei die auf den mehreren Schichten angeordnete Porenanordnung auf verschiedenen Anodengrünbändern verteilt bzw. verschachtelt ist.

2. Herstellungsverfahren nach Anspruch 1, wobei die Porenanordnungsstruktur in einer Press- und Stanzmethode unter Verwendung eines Metallrohrs mit einem Durchmesser in einem Bereich von etwa 0,1 cm bis 0,3 cm ausgebildet wird, um die Porenanordnung mit dem Abstand von etwa 1,4 cm zwischen jeder Pore auf einer Seite des dünnen Streifens der Grünbandanode herzustellen.

3. Herstellungsverfahren nach Anspruch 1, wobei die laminierenden Mehrfachschichten der Anodengrünbänder aus 2 bis 6 Schichten bestehen.

4. Herstellungsverfahren nach Anspruch 1, wobei die Abrasions- und Poliertiefe auf der Oberfläche des Anodensubstrats etwa 10 µm bis 20 µm beträgt.

## Revendications

1. Procédé de fabrication pour la production d'un assemblage d'électrodes de membrane de pile à combustible d'oxyde solide de type planaire avec une structure d'anode en réseau de pores, comprenant les étapes de :
étape 1 : production d'un substrat d'anode pour MEA par moulage de bande pour produire de fines bandes vertes d'anode de bande ;
étape 2 : fourniture d'une structure à réseau de pores ayant chaque pore avec une taille de diamètre et un espacement spécifiés entre les pores sur la surface de la bande verte d'anode, la lamination de multiples couches de la bande verte d'anode qui comprennent une bande verte d'anode perforée et non perforée par lamination à la chaleur et un processus de lamination par pression d'eau égalisée pour produire un substrat supporté par l'anode de bandes vertes ayant une épaisseur entre 300 µm et 800 µm ;
étape 3 : effectuer le frittage sur le substrat supporté par anode de bandes vertes à une température d'environ 1250 °C durant 4 heures avec une vitesse d'incrémentation/décrémentation de température de moins de 3 °C/minute pour obtenir un substrat supporté par anode SOFC de premier stade ;
étape 4 : effectuer l'abrasion et le polissage de surface pour le substrat supporté par anode SOFC, premièrement, en utilisant un papier à gros sable pour effectuer une pré-abrasion et un polissage de surface, suivi par l'utilisation d'un papier à sable plus fin pour produire une surface plate et lisse du substrat supporté par anode ;
étape 5 : construction d'une électrode à électrolytes par revêtement par centrifugation pour produire une demi pile SOFC avec une épaisseur de moins de 10 µm sur la surface plate et lisse du substrat supporté par anode, en effectuant le frittage entre 1200 et 1600 °C durant plus de 6 heures avec une vitesse d'incrémentation/décrémentation de température de moins de 3 °C/minute pour obtenir une demi pile en céramique de premier stade et en utilisant la SEM pour analyser la microstructure de la demi pile pour assurer une bonne adhésion entre l'électrode d'anode et l'électrolyte et que la couche d'électrolyte est sans pore ouvert, si des pores ouverts existent encore dans la couche d'électrolyte, fixer les pores ouverts avec un revêtement par centrifugation ou un frittage à une température d'environ 1350 °C durant plus de 6 heures pour obtenir un électrolyte sans pore ouvert et complètement dense,
étape 6 : la construction d'une couche de cathode poreuse de matériau LSM sur la couche d'électrolyte par impression d'écran, suivi par le frittage à environ 1200 °C durant 3 heures avec une vitesse de température de frittage de moins de 3 °C/minute pour compléter la production d'une pile unitaire de SOFC-MEA,
où la perforation du réseau de pores est fournie sur une ou une pluralité de couches de la bande verte d'anode sur le côté le plus externe de l'anode, où le réseau de pores fourni sur la pluralité de couches est distribué et entrelacé sur des bandes vertes d'anode différentes, respectivement.

2. Procédé de fabrication selon la revendication 1, dans lequel la structure du réseau de pores est formée dans une presse et de manière percée en utilisant un tube métallique avec un diamètre dans une plage d'environ 0,1 à 0,3 cm pour fabriquer le réseau de pores avec l'espacement d'environ 1,4 cm entre chaque pore sur un côté de la bande fine de l'anode à bande verte.

3. Procédé de fabrication selon la revendication 1, dans lequel les multiples couches de lamination des bandes vertes d'anode sont de 2 à 6 couches.

4. Procédé de fabrication selon la revendication 1, dans lequel la profondeur d'abrasion et de polissage sur la surface du substrat d'anode est d'environ 10 µm à 20 µm.
